# EUROPÄISCHE PATENTSCHRIFT

(11) **EP 1 535 244 B1**
(45) Veröffentlichungstag und Bekanntmachung des Hinweises auf die Patenterteilung: **14.12.2011**
(21) Anmeldenummer: 03792116.0
(22) Anmeldetag: 01.07.2003
(51) Int. Cl.: G06T 15/20, G06T 15/50, G06T 19/00

(54) **VERFAHREN ZUM ERZEUGEN EINER ZWEIDIMENSIONALEN BILDINFORMATION AUS EINER STRUKTURIERTEN OBERFLÄCHE, EINEM KÖRPER ODER RAUM**
METHOD FOR GENERATING TWO-DIMENSIONAL IMAGE INFORMATION FROM A STRUCTURED SURFACE, A BODY, OR A SPACE
PROCEDE POUR REALISER UNE DONNEE IMAGE EN DEUX DIMENSIONS A PARTIR D'UNE SURFACE STRUCTUREE, D'UN ELEMENT OU D'UN ESPACE

(30) Priorität: 07.08.2002 DE 10236250
(43) Veröffentlichungstag der Anmeldung: 01.06.2005
(73) Patentinhaber: Dr. Wirth Grafische Technik GmbH & Co. KG, 60437 Frankfurt am Main (DE)
(72) Erfinder: HUEMOELLER, Hans, 64832 Babenhausen (DE)
(74) Vertreter: Naumann, Ulrich
(86) Internationale Anmeldenummer: PCT/DE2003/002191
(87) Internationale Veröffentlichungsnummer: WO 2004/019280

(56) Entgegenhaltungen:
- EP-A- 0 791 897
- US-A- 5 982 378
- STAMOS I ET AL: "3-D model construction using range and image data" PROCEEDINGS IEEE CONFERENCE ON COMPUTER VISION AND PATTERN RECOGNITION. CVPR 2000 (CAT. NO.PR00662), PROCEEDINGS IEEE CONFERENCE ON COMPUTER VISION AND PATTERN RECOGNITION. CVPR 2000, HILTON HEAD ISLAND, SC, USA, 13-15 JUNE 2000, Seiten 531-536 vol.1, XP002264027 2000, Los Alamitos, CA, USA, IEEE Comput. Soc, USA ISBN: 0-7695-0662-3
- ZAKAI Y ET AL: "Three-dimensional modeling and effects on still images" EUROPEAN ASSOCIATION FOR COMPUTER GRAPHICS 17TH ANNUAL CONFERENCE AND EXHIBITION. EUROGRAPHICS '96, POITIERS, FRANCE, 26-30 AUG. 1996, Bd. 15, Nr. 3, Seiten C3-10, C455 - C456, XP000992358 Computer Graphics Forum, 1996, Blackwell Publishers for Eurographics Assoc, UK ISSN: 0167-7055
- SAITO T ET AL: "Comprehensible rendering of 3-D shapes" SIGGRAPH 1990. 17TH ANNUAL ACM CONFERENCE ON COMPUTER GRAPHICS AND INTERACTIVE TECHNIQUES, DALLAS, TX, USA, 6-10 AUG. 1990, Bd. 24, Nr. 4, Seiten 197-206, XP000255785 Computer Graphics, Aug. 1990, USA ISSN: 0097-8930
- TOUTIN, T.: 'Qualitative Aspects of Chromo-Stereoscopy for Depth Perception' ASPRS AMERICAN SOCIETY FOR PHOTOGRAMMETRY AND REMOTE SENSING Bd. 63, Nr. 2, 28 Februar 1997, Seiten 193 - 203

## Beschreibung

Die Erfindung betrifft ein Verfahren zum Erzeugen einer zweidimensionalen Bildinformation aus einer strukturierten Oberfläche, aus einem Körper oder aus einem Raum, insbesondere zum zweidimensionalen Nachbilden der Oberfläche, des Körpers oder des Raumes mit 3D-Anmutung.

Verfahren der eingangs genannten Art sind aus der Praxis bekannt und existieren in den unterschiedlichsten Ausprägungen. So wird beispielsweise im Dekorbereich versucht, durch zweidimensionale Scan-Fotografie möglichst naturgetreu Formen und Oberflächenstrukturen abzubilden, wobei man die bei entsprechender Beleuchtung der Strukturen entstehende Schattenbildung ausnutzt, um einen dreidimensionalen Eindruck der Oberflächenstruktur im Rahmen der zweidimensionalen Abbildung zu vermitteln. Die Erfassung von Oberflächenstrukturen nach dieser Methode ist jedoch äußerst schwierig und aufwendig. Will man den durch die zweidimensionale Scan-Fotografie aufgrund einer ganz besonderen Beleuchtung gewonnenen optischen Eindruck verändern, so sind neue Aufnahmen bei veränderter Beleuchtung erforderlich. Dieser Aufwand ist erheblich und erfordert stets die Handhabung durch einen Spezialisten. Der durch Ausprobieren mit unterschiedlicher Beleuchtung entstehende Aufwand ist kaum zu verantworten, so dass man sich stets mit Ergebnissen zufrieden gibt, die fernab einer optimalen Abbildung mit echter dreidimensionaler Anmutung liegen.

Des Weiteren ist es für sich gesehen aus der Praxis bereits bekannt, Oberflächenstrukturen punktweise abzutasten, nämlich im Rahmen einer optischen Entfernungsmessung. Lediglich beispielhaft sei das Triangulationsverfahren genannt. Durch eine optische Abtastung einer Oberfläche entstehen Informationen zum Relief bzw. zur Oberflächenstruktur, nämlich durch punktweises Abtasten entlang einer Linie und dies über mehrere Linien hinweg. Auf diese Weise lassen sich Informationen zur Oberflächenstruktur und somit ein Höhenprofil der jeweiligen Oberfläche gewinnen.

Aus dem Artikel "3-D Model Construction Using Range and Image Data" von loannis Stamos und Peter K. Allen aus Proceedings IEEE Conference On Computer Vision And Pattern Recognition, CVPR 2000, Juni 2000, Seiten 531-536n vol1 ist ein Verfahren zum Erzeugen eines fotorealistischen 3D-Modells bekannt. Dabei wird der zu modellierende Gegenstand zunächst zwei- und dreidimensional erfasst und aus den dreidimensionalen Daten ein 3D-Modell erzeugt. Die erfassten 2D-Bilder werden in das 3D-Modell eingepasst und dadurch ein vollständiges fotorealistisches 3D-Modell erzeugt. Zum Erhalten eines umfassend nutzbaren 3D-Modells werden die derart berechneten Daten durch weitere Scans aus anderen Blickwinkeln auf den Gegenstand ergänzt.

Der Artikel "Comprehensible Rendering of 3-D Shapes" von Takafumi Saito und Toklichiro Takahashi aus 17th Annual ACM Conference On Computer Graphics And Interactive Techniques, Bd. 24, Nr. 4, Seiten 197-206, August 1990 beschäftigt sich mit der Verbesserung des optischen Eindrucks eines 2D-Bildes. Dazu werden 3D-Daten in Form von Höhenbildern genutzt, aus denen einzelne dreidimensionale Informationen extrahiert und schließlich in das 2D-Bild eingefügt werden. Zum Verbessern des dreidimensionalen Eindrucks werden einzelne Kanten hervorgehoben und Schraffuren oder Schattierungen in einzelnen Bereichen eingefügt.

Der Artikel "Qualitative Aspects of Chromo-Stereiscopy for Depth Perception" von Thierry Tountin in ASPRS American Society for Photogrammetry and Remote Sensing, Bd. 63, Nr. 2, Februar 1997, Seiten 193-2003 zeigt ein Verfahren, bei dem im Bereich der Kartographie 2D-Bilder mit 3D-Informationen in Form von Farben angereichert werden.

Der vorliegenden Erfindung liegt nun die Aufgabe zugrunde, ein Verfahren zum Erzeugen einer zweidimensionalen Bildinformation aus einer strukturierten Oberfläche, aus einem Körper oder aus einem Raum, insbesondere zum zweidimensionalen Nachbilden der Oberfläche, des Körpers oder des Raumes mit 3D-Anmutung, derart auszugestalten und weiterzubilden, dass sich die Original-Oberfläche, der Original-Körper oder der Original-Raum möglichst realitätsgetreu nachbilden lässt, und zwar mit einer zweidimensionalen Abbildung mit 3D-Anmutung. Dabei soll es möglich sein, den 3D-Eindruck nach Gewinnung der erforderlichen Bildinformationen - aus der Oberfläche, aus dem Körper oder aus dem Raum - beliebig zu beeinflussen, insbesondere zu verstärken.

Die voranstehende Aufgabe wird erfindungsgemäß durch ein Verfahren mit den Merkmalen des Patentanspruchs 1 gelöst. Danach ist ein Verfahren zum Erzeugen einer zweidimensionalen Bildinformation aus einer strukturierten Oberfläche, aus einem Körper oder aus einem Raum, insbesondere zum zweidimensionalen Nachbilden der Oberfläche, des Körpers oder des Raumes mit 3D-Anmutung, gekennzeichnet durch folgende Verfahrensschritte:

Die Oberfläche, der Körper oder der Raum wird mittels Farbscanner zum Erzeugen von Farbbildinformationen bzw. zum Erzeugen eines Farbbildes abgetastet. Des Weiteren - gleichzeitig oder danach - wird das Relief der Oberfläche oder der Raum mittels 3D-Scanner zum Erzeugen von Reliefinformationen bzw. eines Höhenprofils der strukturierten Oberfläche bzw. der Raum abgetastet. Wie bereits zuvor erwähnt, könnten hier Verfahren wie Triangulation, konfokale Messung oder dergleichen Anwendung finden. Beliebige Abtastverfahren lassen sich realisieren. Die Oberfläche, der Körper oder der Raum wird zum Erzeugen einer zweidimensionalen Bildinformation mittels 2D-Scanner abgetastet. Danach wird die Oberfläche, der Körper oder der Raum zum Erzeugen einer dreidimensionalen Bildinformation mittels 3D-Scanner abgetastet. Anschließend werden die 2D-Daten und 3D-Daten nach vorgebbarer Vorschrift zur bewussten Zeichnungsverstärkung und zweidimensionale Darstellung des so gewonnenen Bildes verknüpft. So könnte beispielsweise das für sich gesehen bekannte Triangulationsverfahren Anwendung finden, wobei beliebige sonstige Abtastverfahren realisierbar sind.

An dieser Stelle sei angemerkt, dass es sich bei dem Raum regelmäßig um Objekte in einem Raum handelt, die letztendlich im Raum abgetastet werden.

Beim Abtasten der Oberfläche des Körpers oder des Raumes sollte die Beleuchtung diffus und somit winkelneutral sein. Der 2D-Scan liefert die komplette Information über Farbe, Farbverläufe und Farbkontraste. Der 3D-Scan liefert dagegen eine Entfernungsmatrix in Bezug auf die dreidimensionale Bildinformation.

Im Konkreten dient das Abtasten zum Erzeugen der zweidimensionalen Bildinformation zur Gewinnung von Farbbildinformationen bzw. Farbbildern. Das Abtasten zum Erzeugen der dreidimensionalen Bildinformation liefert Reliefinformationen bzw. das Höhenprofil der strukturierten Oberfläche oder des zweidimensional abzubildenden Objekts. Durch zweidimensionales Abtasten lassen sich die Farben der Oberfläche und des Körpers ermitteln. Beim dreidimensionalen Abtasten wird die Form des Reliefs oder des Körpers ermittelt, wobei darunter die Erfassung der Zeichnung (Formverlauf, Formkontrast, virtuelle Höhe-Tiefe, plastische Form, Glanz, Reflex, etc.), des Lichts und etwaiger Schatten zu verstehen ist. Beide Informationen - 2D- bzw. Farbinformation und 3D-Informationen - können über beliebige beobachtende Perspektiven ermittelt werden, wobei eine übliche Kameraoptik Verwendung finden kann. So könnte die Kamera von einem vorgegebenen Beobachtungspunkt die Höhen und Seitenwinkel des Objekts ermitteln, und zwar sowohl für die 2D- als auch für die 3D-Informationen. Die so gewonnenen Bilder setzen sich aus dem Farbbild und aus der 3D-Entfernungsmatrix zusammen, wobei die Daten nach vorgegebener Vorschrift miteinander verknüpft werden. Wesentlich ist jedenfalls, dass die zur plastischen Qualität notwendigen Informationen des Bildes ausschließlich durch den 3D-Scan transportiert bzw. vermittelt werden. Die Anfordert rungen an den 2D-Farbscan reduzieren sich somit erheblich.

Im Konkreten werden die durch Abtasten der Oberfläche oder des Objekts mittels Farbscanner und mittels 3D-Scanner gewonnenen Informationen einem Rechner und gegebenenfalls einer Speichereinheit zugeführt. Hierbei lässt sich in idealer Weise ein PC mit entsprechender Ausstattung verwenden.

Zum Gewinnen der Bildinformationen mit 3D-Anmutung werden die durch Scannen erhaltenen Daten nach vorgebbarer Vorschrift miteinander verknüpft, wobei die Farbbildinformationen als farbliche Grundinformationen zu verstehen sind und die Reliefinformationen zur Markierung bzw. Zeichnung von Höhenunterschieden im Rahmen einer zweidimensionalen Darstellung des gewonnenen Bilds dienen. Je nach Kombination bzw. Überlagerung der Informationen lassen sich unterschiedliche Effekte und somit unterschiedliche Eindrücke in Bezug auf die Dreidimensionalität des eigentlich zweidimensionalen Bilds erzeugen. Hier könnte man von einem Bild mit zweieinhalb Dimensionen sprechen, nämlich von einem Farbbild mit Zeichnungsverstärkung, Schatten oder dergleichen, wonach nämlich eine dreidimensionale Anmutung des Bilds entsteht.

Bereits zuvor ist erwähnt worden, dass die Vorgänge des Farbscannens und des 3D-Scannens nacheinander erfolgen können. Insoweit müsste die Original-Vorlage zweimal abgetastet werden, nämlich ein erstes Mal von einem Farbscanner oder von einer Farbkamera und ein zweites Mal von einem 3D-Scanner.

Alternativ ist es möglich, dass das Farbscannen und das 3D-Seannen zumindest weitgehend gleichzeitig erfolgt. Dabei würden zwei unterschiedliche Scan-Köpfe verwendet werden, die die Original-Vorlage oder das Original-Objekt mehr oder weniger gleichzeitig abtasten.

An dieser Stelle sei angemerkt, dass zur Realisierung des erfindungsgemäßen Verfahrens lediglich ein einmaliges Scannen - mittels Farbscanner und 3D-Scanner - erforderlich ist. Durch Manipulation der dabei gewonnenen Bilddaten lassen sich beliebige Anmutungen bzw. Zeichnungsverstärkungen erzielen, ohne das die Aufnahme bzw. der Scanvorgang wiederholt werden muss.

Im Konkreten werden die durch den Farbscanner gewonnenen Informationen digitalisiert und können entsprechend mittels EDV verarbeitet werden. Die durch 3D-Scannen gewonnenen Reliefinformationen oder Objektinformationen lassen sich in vorteilhafter Weise als Schwarz-/Weiß-Bild darstellen, wobei Punkte größter Höhe weiß und Punkte kleinster Höhe schwarz darstellbar sind. Insoweit lässt sich ein Eindruck für Höhe und Tiefe der Oberfläche gewinnen.

Zur Realisierung der zweidimensionalen Nachbildung der Oberfläche mit 3D-Anmutung werden die durch Scannen erhaltenen Reliefinformationen oder Objektinformationen als zusätzliche Bildinformationen den Farbbildinformationen beigemischt. Die Verknüpfung der durch Scannen erhaltenen Daten erfolgt durch Anwendung geeigneter Algorithmen, die im Sinne eines Filters wirken können. Mittels der Algorithmen werden die Bilder beider Abscannvorgänge im EDV-System übereinander gelegt bzw. übereinander gepasst, so dass eine Verstärkung der Modulation mit Informationen aus dem Relief bzw. der Form des Objekts entsteht.

In ganz besonders vorteilhafter Weise werden die durch Scannen erhaltenen Reliefinformationen oder Objektinformationen und die Verknüpfung mit den Farbbildinformationen zur Simulation von definierbaren Beleuchtungssituationen verwendet, wobei dabei in weiter vorteilhafter Weise eine Schattenbildung simuliert werden kann. Im Rahmen der definierbaren Beleuchtungssituationen lässt sich der Beleuchtungswinkel und/oder die Schattenlänge und/oder die Größe und/oder die Überfüllung frei wählen. Das Mischen bzw. Verknüpfen der Farbbildinformationen und der Reliefinformationen bzw. 3D-Informationen könnte derart erfolgen, dass die Farbbildinformationen bezüglich der Helligkeit und/oder des Buntwertes und/oder der Sättigung moduliert werden, wobei es in ganz besonders vorteilhafter Weise möglich ist, den Buntwert und die Sättigung zu belassen und lediglich die Helligkeit zu verändern.

Im Konkreten könnten beispielsweise die Farbbildinformationen in eine LAB-Darstellung gewandelt werden. Das Schwarz-/Weiß-Reliefsignal könnte mit dem reinen Helligkeitssignal beispielsweise durch Multiplikation gemischt werden. Die Sättigung und der Buntwert blieben dabei unverändert. Ein solches Vorgehen führt zu einer drastischen Zeichnungsveränderung, insbesondere zu einer Zeichnungsverstärkung.

Ebenso lässt sich eine künstliche Beleuchtung und Schattenbildung erzeugen. Dabei könnten mit den Reliefinformationen eine Topologie benutzt werden, die eine beliebig variable Beleuchtung und somit auch eine Schattenbildung erzeugen kann. Durch entsprechende Kombination der Farbbildinformationen mit den Reliefinformationen lassen sich demnach dreidimensional anmutende Effekte bei zweidimensionaler Abbildung im Rahmen eines sich anschließenden Druckverfahrens realisieren.

Das Farbscannen selbst kann mit herkömmlichen Farbscannern erfolgen. Die Reliefinformationen lassen sich über herkömmliche optische Abtastverfahren gewinnen, wobei die Anwendung sämtlicher bekannter Verfahren zur 3D-Abtastung möglich ist. Das 3D-Scannen umfasst dabei eine punktweise und gegebenenfalls linienweise Abtastung.

Die durch Abtasten gewonnenen Reliefinformationen oder Objektinformationen werden grundsätzlich zur Zeichnungsverstärkung und gegebenenfalls zur Schattenbildung verwendet. Ebenso ist es - ergänzend oder alternativ - möglich, die Reliefinformationen oder Objektinformationen zum Prägen des zweidimensionalen Bilds bzw. der entsprechenden Bildunterlage zu verwenden. Dadurch ließe sich die Oberflächenstruktur quasi originalgetreu nachbilden, jedenfalls mit einem dreidimensional fühlbaren Eindruck.

Das erfindungsgemäße Verfahren kann in der Praxis überall dort Einsatz finden, wo es um die möglichst originalgetreue Nachbildung von Oberflächen mit Relief bzw. von entsprechenden Oberflächenstrukturen oder von Objekten geht. So lässt sich das Verfahren zur Gewinnung dreidimensional anmutender Bildinformationen für das Bedrucken von Tapeten, zur Herstellung eines Fußbodenlaminats, zur Herstellung eines Möbeldekors mit Holz-, Stein- und/oder Fantasiestrukturen verwenden. Eine ganz besondere Verwendung im Rahmen der Herstellung von Dekorelementen wäre die möglichst naturgetreue Abbildung von Holz-, Stein- und Fantasiedekor im Bereich des Amaturenbretts eines Autos. Folien und Verpackungsmaterialien ließen sich ebenfalls entsprechend ausgestalten.

Eine weitere Anwendung liegt bei der drucktechnischen Veredelung von Fußbodenbelägen, insbesondere auch bei der Herstellung von bedrucktem Kunststoff aus PVC oder ähnlichen Materialien. Ebenso ließen sich Kacheln bedrucken. Tischdecken aus Kunststoff, Wachs oder dergleichen könnten entsprechend mit Oberflächeninformationen bzw. Bildern versehen werden. Klinker, Riemchen oder dergleichen könnten bedruckt werden. Auch ließen sich Stoff- und Webmuster mit 3D-Anmutung auf eine flächige Unterlage verbringen. Ebenso ist es möglich, Textilien mit einem entsprechenden 3D-Druck zu versehen. Von ganz besonderer Bedeutung könnte die Gemäldereproduktion sein, wonach sich nämlich von einem Originalbild ein Druck mit 3D-Anmutung, d. h. möglichst originalgetreu, erzeugen lässt. Voranstehende Beispiele sollen die Tragweite der beanspruchten Lehre verdeutlichen, diese jedoch nicht auf die genannten Beispiele einschränken.

Letztendlich handelt es sich bei dem erfindungsgemäßen Verfahren um die Kombination von Farbbildinformationen mit Reliefinformationen bzw. Objektinformationen, wobei die Reliefinformationen bzw. Objektinformationen zur Zeichnungsverstärkung und gegebenenfalls Schattenbildung dienen.

Die durch einmaliges Abtasten gewonnenen Bildinformationen lassen sich unter Zugrundelegung geeigneter Algorithmen beliebig miteinander kombinieren, so dass bei entsprechenden Software-Vorgaben unterschiedliche Bilder mit unterschiedlichen Ausprägungen erzeugbar sind. Letztendlich hat der Laie die Möglichkeit, mit den einmal gewonnen abgespeicherten Bildinformationen beliebig anmutende - unterschiedliche - zweidimensionale Bilder zu erzeugen. Mit anderen Worten lässt sich durch Anwendung entsprechender Verknüpfungsvorschriften ausprobieren, mit welcher Verknüpfungsvorschrift und unter Zugrundelegung welcher Kombinationsmöglichkeiten sich eine bestmöglicher dreidimensionaler Eindruck erzeugen lässt.

Ganz besonders sei hervorgehoben, dass die 3D-Anmutung beliebig verstärkt werden kann, nämlich dadurch, dass ermittelte Entfernungen zu abgetasteten Punkten am Objekt - rechnerisch - vergrößert oder verkleinert werden. So lassen sich grö-βere Entfernungsdifferenzen "herausfiltern", wodurch eine bessere Wirkung bzw. Überzeichnung durch Aneinanderreihen der jeweiligen Bildpunkte entsteht.

Auch ist es denkbar, dass die Oberflächenstruktur oder das Objekt zeilenweise abgetastet werden, ähnlich wie bei der bekannten Zeilentriangulation. Dabei können - unter Zugrundelegung mathematischer Vorschriften - einzelne aufgenommene Bildpunkte als gut oder schlecht qualifiziert werden und es kann ein abermaliges Abtasten der gleichen Zeile - möglicherweise mit einer modifizierten Beleuchtung oder Belichtungszeit - stattfinden, so dass entlang einer Zeile die als gut definierten Bildpunkte zu einer insgesamt "guten" Zeile zusammengesetzt werden. Zeile für Zeile lässt sich somit das gesamte Objekt bzw. das Oberflächenrelief abtasteten und lassen sich die so gewonnenen Daten mit den 2D-Informationen, d. h. mit den Farbinformationen, kombinieren.

Jedenfalls werden im Rahmen des erfindungsgemäßen Verfahrens statt kathesischer Koordinaten Raumwinkel mit Farb- und Entfernungsinformationen überlagert. Die Zerlegung in jeweilige Bildpunkte soll dabei so fein sein, dass die erzeugten Rasterbilder grafisch verwertbar sind. Eine Verstärkung der Zeichnung bzw. ein Überzeichnen lässt sich durch punktgenaue Überlagerung und Modulation der Luminanz mit der Entfernungsmatrix (Höhenwinkel, Seitenwinkel und Entfernung) realisieren. Licht und Schatten lassen sich beeinflussen, nämlich durch bewusstes Ansteuern von Beleuchtungseffekten anhand diverser Software und Standardtools.

Ziel ist es jedenfalls, eine nahezu perfekte plastische 3D-Anmutung beliebiger Oberflächenreliefs und Objekte zu erreichen. Das erfindungsgemäße Verfahren kann sowohl in der Profifotografie als auch in der privaten Laienfotografie Anwendung finden. So lassen sich beliebige Objekte mit 3D-Anmutung abbilden. Auf Verpackungen können die darin befindlichen Gegenstände quasi plastisch dargestellt werden. Einem Amateur wird es unter Nutzung des erfindungsgemäßen Verfahrens möglich sein, Fotos mit 3D-Anmutung ohne besondere Ausleuchtung zu erzeugen, so dass Erfahrungen mit künstlichem Licht und Blitzlicht keine Rolle mehr spielen. Eine Zeichnungsverstärkung bewirkt den hier angestrebten optischen Effekt der 3D-Anmutung.

Auch in der Amateur- und Profivideotechnik könnte man das erfindungsgemäße Verfahren zum Einsatz bringen, und zwar ohne besondere Ausleuchtung bei der Filmaufnahme. Das aufwendige Spiel mit natürlichem Licht und Kunstlicht erübrigt sich. Eine Zeichnungsverstärkung ist ohne besonderen Beleuchtungsaufwand möglich, nämlich gemäß den voranstehenden Ausführungen.

Auch bei natürlichem Licht - im Freien - sind dreidimensional anmutende Aufnahmen möglich, die ansonsten nur mit künstlicher Beleuchtung oder bei idealen - natürlichen - Ausleuchtungsbedingungen möglich sind.

Zusammenfassend lässt sich das erfindungsgemäße Verfahren - ausgehend vom Stand der Technik - wie folgt darstellen:

Die Möglichkeiten der Darstellung von flachen, strukturierten Vorlagen mit 3-dimensionaler Anmutung auf 2-dimensionalen Displays (wie z.B. bei Dekor oder Verpackung) und von Räumen mit Körpern wird durch herkömmliche Fotografie nur ungenügend genutzt. Bei der klassischen Fotografie leuchtet man das Objekt aus und erfasst alle wesentlichen Eigenschaften des entstehenden Bildes in einem Schritt, nämlich Farbe, Kontraste, Verläufe, Licht und Schatten, Tiefe/Erhabenheit, Form, Glanz, etc..

Bedauerticherweise gibt es für die voranstehend genannten Eigenschaften keine optimale Ausleuchtung, zumal manche dieser Eigenschaften sogar gegenläufige Tendenzen zeigen. Mit anderen Worten könnte man sagen, dass sich manche dieser Eigenschaften nicht miteinander "vertragen". Folglich gilt es hier stets einen Kompromiss für die Einstellung zu finden, woraus sich ein zentraler Teil der klassischen Fotografiekunst ergibt.

Das hier in Rede stehende Verfahren könnte man als "neue Fotografie" bezeichnen. Der hier zugrunde liegende Ansatz ist ein völlig anderer. So erfasst man die Farbe und die Form des Objekts in getrennten Vorgängen. Dadurch bleiben Eigenschaften voneinander unabhängig. Man erhält in jedem Fall eine vollständige Information des Bildes, aus der sich alle die oben genannten Eigenschaften erzeugen lassen. Die Einstellungen für beide Vorgänge sind standardisierbar.

Bei strukturierten Flächen - am Objekt selbst oder insgesamt im Raum gesehen - geht man zur Erzeugung der Bildinformation beispielhaft wie folgt vor:

So kann man senkrecht auf die Vorlage stehende Scanner einsetzen. Die Scanrichtungen sind kartesisch. Man scannt die Farbe des Bildes mit den Verläufen, die aus der Farbe resultieren, mit einem 2D-Scanner. Die Ausleuchtung sollte dabei gleichmäßig diffus winkelneutral sein, um keine Beleuchtungsrichtung und entsprechende Schattierungen bereits beim Scanvorgang festzulegen. Die Zerlegung sollte mechanisch und mit hoher Präzision erfolgen.

Im zweiten Schritt wird die Form der Vorlage gescannt. Man nutzt dazu einen Scanner mit großer Zerlegung und feinster Quantelung. Bestens geeignet sind dazu konfokale Vorrichtungen, die von Natur aus koaxial auf die Vorlage gerichtet sind. Die aus dem Scanvorgang entstehende Information kann als Byte-Map visualisiert werden, wobei weiß oben und schwarz unten liegt. Schwarz stellt somit den Untergrund dar.

Bei entsprechenden Aufnahmen im Raum geht man dagegen - ebenfalls in erfindungsgemäßer Weise - geringfügig anders vor:

Man verwendet in vorteilhafter Weise Raumwinkel-Kameras. Der Scan erfolgt nach Höhen- und Seiteriwinkeln. Man benutzt Standard-Kameras zur Erfassung von Farbe, Farbkontrast und Farbverläufen. Die Beleuchtung kann beliebig sein. Eine diffuse Beleuchtung bietet sich auch hier an.

Für kleinere Räume mit kleinen Objekten eignen sich aktive 3D-Scanner zur Erfassung der Entfernungsmatrix (insbesondere für Katalogbilder etc.). Für größere Räume setzt man vorteilhafterweise passive Verfahren ein, so beispielsweise die klassische Auswertung von Stereobildern. Beide Aufnahmen, Farbbild und Entfernungsmatrix, sollen vom gleichen Erhebungspunkt mit deckungsgleichen Raumwinkeln gemacht werden. Entscheidend ist, dass beide Aufnahmen von hoher grafischer Qualität sind. Eine hohe Zerlegung und eine feine Quantelung sind von Vorteil. Beide Aufnahmen sind passgenau anzufertigen, so dass eine einwandfreie Deckung möglich ist.

Das Zusammenführen von 2D-Scan bzw. Farbbild und 3D-Scan bzw. Entfernungsmatrix erfolgt über einen Computer. So lassen sich beispielhaft zwei Verfahren darstellen:
1) Die Zeichnungsverstärkung erfolgt durch Multiplikation der Helligkeitswerte des Farbbildes und des S/W-Bildes, welches repräsentativ für die Form ist.
2) Die relativ flache virtuelle Topologie des Farbbildes wird von der exakten Topologie des 3D-Bildes überprägt. Dazu nutzt man ebenfalls das repräsentative S/W-Bild. Die ausgeprägte Landschaft des Bildes lässt sich im Computer mit beliebig ausgedehnten und gleichmäßigen Lichtquellen beleuchten. Licht und Schatten sind erzeugbar. Höhen, Seitenwinkel und Profilhöhen-Skalierungen sind beliebig einstellbar.

Die voranstehende Methode führt zu folgendem Ergebnis:

Farbe, Farbkontrast und Farbverläufe werden durch den 2D-Scan bzw. das Farbbild bestimmt. Formkontraste, Formverläufe, Licht- und Schatten, virtuelle Höhe und Tiefe, plastische Form und Glanz werden durch den 3D-Scan vorgegeben.

Die zur plastischen Qualität erforderlichen Informationen des Bildes werden ausschließlich durch den 3D-Scan vorgegeben bzw. transportiert. Die Anforderungen an den 2D-Scan reduzieren sich somit erheblich.

Das erfindungsgemäße Verfahren ergibt folgende Vorteile:
- man muss nur zweimal scannen und hat damit alle Eigenschaften der Vorlage oder des Raumes bereits erfasst;
- die Scans als solche sind standardisiert und einfach durchführbar;
- die plastische Ausleuchtung erfolgt im Computer und kann unendlich ausgedehnt und gleichmäßig sein; beim Raumbild können zusätzlich beliebige Spots verwendet werden;
- formbegründete Verläufe bekommen eine extreme Zeichnung;
- die erzeugten Bilder sind absolut ohne ungewollte Reflexe; ein 3D-Scanner verwertet die nicht gewollten Reflexe nur zur Bestimmung der Entfernung und nicht als Bildinhalt;
- gewollte Reflexe können durch Ausrichtung der Beleuchtung beliebig eingestellt werden;
- der virtuelle räumliche Eindruck kann durch Licht und Schatten beliebig gesteuert werden;
- der virtuelle räumliche Eindruck kann durch Licht und Schatten beliebig gesteuert werden;
- die gescannte Farbe verliert an Bedeutung; Farbflächen können maskiert werden und durch neue Farben ersetzt werden; dabei können die Ersatzfarben höher gesättigt sein Die Verläufe dieser Flächen entstehen durch den 3D-Scan.

Schließlich gilt es festzuhalten, dass nach dem voranstehend geschilderten Verfahren perfekte fotografische Abbildungen entstehen. So lassen sich zahlreiche Effekte erzielen, die mit klassischer Fotografie nicht annähernd so gut oder gar nicht machbar sind, wobei die Anfertigung einer klassischen Fotografie ein spezifisches Fachwissen erfordert, welches hier bei Anwendung des erfindungsgemäßen Verfahren nicht erforderlich ist.

## Patentansprüche

1. Verfahren zum Erzeugen einer zweidimensionalen Bildinformation aus einer strukturierten Oberfläche, aus einem Körper oder aus einem Raum, insbesondere zum zweidimensionalen Nachbilden der Oberfläche, des Körpers oder des Raumes mit 3D-Anmutung, wobei das Verfahren folgende Verfahrensschritte umfasst:
Abtasten der Oberfläche, des Körpers oder des Raumes zum Erzeugen einer zweidimensionalen Bildinformation (2D-Daten) mittels eines 2D-Scanners und
Abtasten der Oberfläche, des Körpers oder des Raumes zum Erzeugen einer dreidimensionalen Bildinformation (3D-Daten) mittels eines 3D-Scanners Verknüpfent der 2D- und 3D-Daten nach vorgebbarer Vorschrift zur bewussten Zeichnungsverstärkung und zweidimensionalen Darstellung eines so gewonnenen Bildes, wobei bei der Zeichnungsverstärkung den 2D-Daten die 3D-Daten oder die weiterbearbeiteten 3D-Daten als zusätzliche Bildinformationen derart beigemischt werden, dass eine 3D-Anmutung der kombinierten Daten erzeugt oder verstärkt wird, **dadurch gekennzeichnet, dass**
das Mischen bzw. Verknüpfen von Farbbildinformationen und Tiefeninformationen gemäß einer aus dan 3D Daten gewonnenen Entfernungsmatrix derart erfolgt, dass die Farbbildinformationen bzgl. Helligkeit und/oder Farbwert und/oder Sättigung moduliert werden, wobei die 3D-Daten als Schwarz/Weiß-Bild dargestellt werden und wobei die Zeichnungsverstärkung durch Multiplikation der Helligkeitswerte des Farbbildes und des Schwarz/Weiß-Bildes erfolgt.

2. Verfahren nach Anspruch 1, **dadurch gekennzeichnet, dass** das Abtasten zum Erzeugen der zweidimensionalen Bildinformation Farbbildinformationen betreffend Farbe, Farbverläufe und Farbkontraste liefert und/oder dass das Abtasten zum Erzeugen der dreidimensionalen Bildinformation Reliefinformationen bzw. das Höhenprofil der strukturierten Oberfläche, des Objekts oder des Raumes liefert.

3. Verfahren nach Anspruch 1 oder 2, **dadurch gekennzeichnet, dass** das Farbscannen und das 3D-Scannen nacheinander erfolgt oder dass das Farbscannen und das 3D-Scannen gleichzeitig oder zumindest weitgehend gleichzeitig erfolgt, wobei das Farbscannen und das 3D-Scannen räumlich bzw. örtlich nicht oder zumindest geringfügig versetzt erfolgen kann.

4. Verfahren nach einem der Ansprüche 1 bis 3, **dadurch gekennzeichnet, dass** die durch 3D-Scannen gewonnenen Daten eine Entfernungsmatrix bilden, wobei die ermittelten und in der Matrix dargestellten Entfernungen durch geeignete Algorithmen (Filter) wahlweise vergrößert oder verkleinert werden, so dass sich über Entfernungsdifferenzen beispielsweise größere Formkontraste oder steilere Formverläufe ergeben.

5. Verfahren nach einem der Ansprüche 1 bis 4, **dadurch gekennzeichnet, dass** die durch 3D-Scannen gewonnenen Reliefinformationen, insbesondere die Entfernungsmatrix, als Schwarz-/Weiss-Bild dargestellt und behandelt werden, wobei Punkte größter Höhe weiss und Punkte kleinster Höhe schwarz dargestellt werden.

6. Verfahren nach einem der Ansprüche 1 bis 5, **dadurch gekennzeichnet, dass** die durch Scannen erhaltenen Reliefinformationen - Tiefeninformationen gemäß Entfernungsmatrix - als zusätzliche Bildinformationen den Farbbildinformationen beigemischt werden, wobei die Tiefeninformationen und die Verknüpfung mit den Farbbildinformationen zur Simulation von definierbaren Beleuchtungssituationen, beispielsweise zur künstlichen Licht- und Schattenbildung und/oder zur Erzeugung von Glanz, Reflexion oder dgl., verwendet werden und wobei im Rahmen der definierbaren Beleuchtungssituationen der Beleuchtungswinkel (Höhen- und Seitenwinkel) und/oder die Schattenlänge und/oder die Schattengröße und/oder die Schattenüberfüllung frei wählbar ist bzw. sind.

7. Verfahren nach einem der Ansprüche 1 bis 6, **dadurch gekennzeichnet, dass** die Verknüpfung der durch Scannen erhaltenen Daten durch Anwendung geeigneter Algorithmen erfolgt.

8. Verfahren nach einem der Ansprüche 1 bis 7, **dadurch gekennzeichnet, dass** das Farbscannen mittels herkömmlichem Farbscanner, Farbkamera oder mittels koaxial messendem Punktsensor (RGB oder spektrometrisch) erfolgt und/oder dass das 3D-Scannen eine punktweise Abstandsmessung umfasst.

9. Verfahren nach einem der Ansprüche 1 bis 8, **dadurch gekennzeichnet, dass** die Tiefeninformationen gemäß Entfernungsmatrix zum Prägen des zweidimensionalen Bildes dienen oder dass das zweidimensionale Bild zum flächigen Druck zur Herstellung hochwertiger grafischer Elemente oder Dekorelemente mit 3D-Anmutung dient, oder dass die Verknüpfung der Farb- und 3D-Daten gemäß Entfernungsmatrix zur Erzeugung eines Bildes oder einer Bildfolge beliebiger Objekte mit 3D-Anmutung durch Zeichnungsverstärkung dient.

## Claims

1. Method for generating two-dimensional image information from a structured surface, a body or a space, especially for the two-dimensional reproduction of the surface, the body or the space with a 3D appearance, the method comprising the following method steps:
scanning the surface, the body or the space by means of a 2D scanner in order to generate two-dimensional image information (2D data) and
scanning the surface, the body or the space by means of a 3D scanner in order to generate three-dimensional image information (3D data),
linking the 2D and 3D data in accordance with a predeterminable specification for the deliberate drawing enhancement and two-dimensional representation of an image so obtained, the 3D data or further processed 3D data being admixed to the 2D data as additional image information during the drawing enhancement in such a manner that a 3D appearance of the combined data is generated or enhanced,
**characterised in that**
the mixing or linking of colour image information and depth information is effected in accordance with a distance matrix obtained from the 3D data, in such a manner that the colour image information with regard to brightness and/or colour value and/or saturation is modulated, the 3D data being represented as a black-and-white image and the drawing enhancement being effected by multiplying the brightness values of the colour image and the black-and-white image.

2. Method according to claim 1, **characterised in that** the scanning to generate the two-dimensional image information yields colour image information relating to colour, colour gradients and colour contrasts and/or **in that** the scanning to generate the three-dimensional image information yields relief information, or the height profile, of the structured surface, the object or the space.

3. Method according to claim 1 or 2, **characterised in that** the colour scanning and the 3D scanning are effected one after the other or **in that** the colour scanning and the 3D scanning are effected simultaneously or at least substantially simultaneously, the colour scanning and the 3D scanning being able to take place in a manner which is not or is at least only slightly offset spatially or locally.

4. Method according to any one of claims 1 to 3, **characterised in that** the data obtained by 3D scanning form a distance matrix, the distances ascertained and represented in the matrix being enlarged or, alternatively, reduced by suitable algorithms (filters) so that, by means of distance differences, for example, greater shape contrasts or steeper shape gradients result.

5. Method according to any one of claims 1 to 4, **characterised in that** the relief information obtained by 3D scanning, especially the distance matrix, is represented and treated as a black-and-white image, points of greatest height being represented as white and points of smallest height being represented as black.

6. Method according to any one of claims 1 to 5, **characterised in that** the relief information - depth information according to the distance matrix - obtained by scanning is admixed to the colour image information as additional image information, the depth information and the linking with the colour image information being used to simulate definable illumination situations, for example for artificial light and shadow formation and/or for the generation of brilliance, reflection or the like, and, in the context of definable illumination situations, the illumination angle (elevation angle and azimuth angle) and/or the shadow length and/or the shadow size and/or the shadow expansion being freely selectable.

7. Method according to any one of claims 1 to 6, **characterised in that** the linking of the data obtained by scanning is effected by applying suitable algorithms.

8. Method according to any one of claims 1 to 7, **characterised in that** the colour scanning is effected by means of a conventional colour scanner, colour camera or by means of a coaxially measuring point sensor (RGB or spectrometric) and/or **in that** the 3D scanning includes a pointwise distance measurement.

9. Method according to any one of claims 1 to 8, **characterised in that** the depth information according to the distance matrix is used to imprint the two-dimensional image or **in that** the two-dimensional image is used for flat printing for the manufacture of high-grade graphic elements or decor elements with a 3D appearance, or **in that** the linking of the colour and 3D data according to the distance matrix is used to generate an image or a sequence of images of any desired objects with a 3D appearance by drawing enhancement.

## Revendications

1. Procédé pour générer une information d'image en deux dimensions à partir d'une surface structurée, d'un corps ou d'un espace, en particulier pour la représentation en deux dimensions de la surface, du corps ou de l'espace avec une impression de 3D, le procédé comprenant les étapes de procédé suivantes :
balayage de la surface, du corps ou de l'espace pour générer une information d'image en deux dimensions (données en 2D) au moyen d'un scanner en 2D et
balayage de la surface, du corps ou de l'espace pour générer une information d'image en trois dimensions (données en 3D) au moyen d'un scanner en 3D,
association des données en 2D et des données en 3D selon une spécification pouvant être prédéfinie pour le renforcement volontaire du dessin et la représentation en deux dimensions d'une image ainsi obtenue, les données en 2D ou les données en 3D retraitées étant cumulées sous forme d'informations d'image supplémentaires lors du renforcement de dessin, de telle sorte qu'une impression en 3D des données combinées est générée ou amplifiée, **caractérisé en ce que**
le mélange ou l'association d'informations d'image couleur et d'informations en profondeur s'effectue selon une matrice de distance obtenue à partir des données en 3D, de telle sorte que les informations d'image couleur concernant la luminosité et/ou la valeur chromatique et/ou la saturation sont modulées, les données en 3D étant représentées sous forme d'image en noir et blanc et le renforcement de dessin s'effectuant par multiplication des valeurs de luminosité de l'image couleur et de l'image en noir et blanc.

2. Procédé selon la revendication 1, **caractérisé en ce que** le balayage destiné à générer l'information d'image en deux dimensions fournit des informations d'image couleur concernant la couleur, les tracés de couleur et les contrastes de couleur et/ou **en ce que** le balayage destiné à générer l'information d'image en trois dimensions fournit des informations sur le relief ou le profilé de hauteur de la surface structurée, de l'objet ou de l'espace.

3. Procédé selon la revendication 1 ou 2, **caractérisé en ce que** le balayage couleur et le balayage en 3D sont effectués successivement ou **en ce que** le balayage couleur et le balayage en 3D s'effectuent simultanément ou au moins largement simultanément, le balayage couleur et le balayage en 3D pouvant s'effectuer de façon non décalée ou tout du moins légèrement décalée au niveau de l'espace ou au niveau local.

4. Procédé selon l'une quelconque des revendications 1 à 3, **caractérisé en ce que** les données obtenues par balayage en 3D forment une matrice de distance, les distances calculées et représentées dans la matrice étant augmentées ou réduites au choix par des algorithmes appropriés (filtres), de sorte que par exemple des contrastes de forme plus grands ou des tracés de forme plus forts sont obtenus par des différences de distance.

5. Procédé selon l'une quelconque des revendications 1 à 4, **caractérisé en ce que** les informations sur le relief, obtenues par le balayage en 3D, en particulier la matrice de distance, sont représentées et traitées sous forme d'image en noir et blanc, des points de hauteur maximale étant représentés en blanc et des points de hauteur minimale étant représentés en noir.

6. Procédé selon l'une quelconque des revendications 1 à 5, **caractérisé en ce que** les informations sur le relief obtenues par balayage informations sur la profondeur selon la matrice de distance - sont ajoutées sous forme d'informations d'image supplémentaires aux informations d'image couleur, les informations sur la profondeur et l'association avec les informations d'image couleur étant utilisées pour simuler des situations d'éclairage définissables, par exemple pour la formation artificielle de lumière et d'ombre et/ou pour générer du brillant, de la réflexion ou similaire, et l'angle d'éclairage (angle d'élévation et angle d'azimut) et/ou la longueur d'ombre et/ou la grandeur d'ombre et/ou la surcharge d'ombre pouvant être choisi(s) librement dans le cadre des situations d'éclairage définissables.

7. Procédé selon l'une quelconque des revendications 1 à 6, **caractérisé en ce que** l'association des données obtenues par balayage s'effectue en utilisant des algorithmes appropriés.

8. Procédé selon l'une quelconque des revendications 1 à 7, **caractérisé en ce que** le balayage couleur s'effectue au moyen d'un scanner couleur classique, d'une caméra couleur ou d'un capteur ponctuel mesurant de façon coaxiale (RVB ou spectrométrique) et/ou **en ce que** le balayage en 3D comprend une mesure de distance point par point.

9. Procédé selon l'une quelconque des revendications 1 à 8, **caractérisé en ce que** les informations sur la profondeur selon la matrice de distance servent à la caractérisation de l'image en deux dimensions ou **en ce que** l'image en deux dimensions sert à l'impression à plat pour fabriquer des éléments graphiques ou des éléments de décor graphiques de haute qualité avec une impression de 3D, ou **en ce que** l'association des données couleur et données en 3D selon la matrice de distance sert à générer une image ou une succession d'images d'objets quelconques avec une impression de 3D par renforcement de dessin.
